# EUROPÄISCHE PATENTSCHRIFT

(11) **EP 3 833 593 B1**
(45) Veröffentlichungstag und Bekanntmachung des Hinweises auf die Patenterteilung: **21.06.2023**
(21) Anmeldenummer: 19769010.0
(22) Anmeldetag: 06.08.2019
(51) Int. Cl.: B62D 6/00

(54) **ZAHNSTANGENKRAFT OPTIMIERTES LENKGEFÜHL EINER STEER-BY-WIRE-KRAFTFAHRZEUGLENKUNG**
STEERING-RACK-FORCE OPTIMISED STEERING SENSATION OF A STEER-BY-WIRE MOTOR VEHICLE STEERING SYSTEM
SENSIBILITÉ DIRECTIONNELLE OPTIMISÉE EN TERMES DE FORCE DE CRÉMAILLÈRE D'UNE DIRECTION DE VÉHICULE AUTOMOBILE À COMMANDE PAR CÂBLE ÉLECTRIQUE

(30) Priorität: 08.08.2018 DE 102018119268
(43) Veröffentlichungstag der Anmeldung: 16.06.2021
(73) Patentinhaber: thyssenkrupp Presta AG, 9492 Eschen (LI); thyssenkrupp AG, 45143 Essen (DE)
(72) Erfinder: ROHRMOSER, Manuel, 6712 Thüringen (AT)
(74) Vertreter: thyssenkrupp Intellectual Property GmbH
(86) Internationale Anmeldenummer: PCT/EP2019/071080
(87) Internationale Veröffentlichungsnummer: WO 2020/030621

(56) Entgegenhaltungen:
- DE-A1-102010 048 991

## Beschreibung

Die vorliegende Erfindung betrifft ein Verfahren zur Anpassung eines Lenkmoments zur Steuerung eines Feedback-Aktuators einer Steer-by-Wire-Kraftfahrzeuglenkung mit den Merkmalen des Oberbegriffs des Anspruchs 1 und ein Verfahren zur Steuerung eines Steer-by-Wire-Lenksystems mit den Merkmalen des Oberbegriffs des Anspruchs 9, sowie ein Steer-by-Wire-Lenksystem mit den Merkmalen des Oberbegriffs des Anspruchs 10.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Allerdings ist eine entsprechend angepasste Rückmeldung, beispielsweise beim Parken oder bei einer Geradeausfahrt, bei der ein der Fahrzeugreaktion angepasstes, je nach Fahrzeughersteller unterschiedliches Lenkmoment als Kraft-Rückmeldung gewünscht ist, vorgesehen. Bei einer Kurvenfahrt wirken Reaktionskräfte als Querkräfte auf das Lenkgetriebe, welche der Feedback-Aktuator in Form eines der Lenkrichtung entgegengesetzten Moments nachbildet. Der Fahrer erfährt ein dadurch vorgebbares Lenkgefühl. Um bei Steer-by-Wire-Lenkungen die Rückwirkungen der Straße auf das Lenkrad zu simulieren, ist es notwendig, am Lenkrad oder der Lenksäule einen Feedback-Aktuator (FBA) vorzusehen, welcher in Abhängigkeit von den gewünschten Rückwirkungen der Lenkhandhabe ein Lenkgefühl aufprägt.

Herkömmlicherweise werden bei elektrischen Servolenkungen (EPS) die Rückmeldungseigenschaften der Lenkung durch die Zahnstangenkraft bestimmt, die von den Spurstangen, welche über das Fahrwerk an die Räder angebunden sind, auf die Zahnstange wirkt. Die Zahnstangenkraft wird maßgeblich von den aktuellen Seitenführungskräften beeinflusst. Damit entspricht ein wesentlicher Teil der aktuellen Zahnstangenkraft einer Querbeschleunigung. Die Zahnstangenkraft wird aber nicht nur durch die während des Durchfahrens einer Kurve auftretenden Seitenkräfte bestimmt, sondern es hat eine Vielzahl von weiteren Größen einer aktuellen Fahrsituation einen Einfluss auf die Zahnstangenkraft. Ein Beispiel hierfür ist die Fahrbahnbeschaffenheit (Unebenheiten, Spurrillen, Reibwert).

Die aktuell anliegende Zahnstangenkraft kann mittels eines an der Zahnstange angeordneten Momentensensors oder durch Schätzung mittels eines auf einem Modell des Lenksystems beruhenden sogenannten Beobachters ermittelt werden. Ein solches Verfahren ist beispielsweise in der Offenlegungsschrift DE 103 320 23 A1 offenbart. Dort wird zur Bestimmung eines Lenkmoments für das EPS Lenksystem eines Fahrzeugs das Lenkmoment in Abhängigkeit von der an gelenkten Rädern auftretenden Seitenkraft oder in Abhängigkeit von dem Ist-Lenkmoment bestimmt. Das bekannte Verfahren sieht vor, die Seitenkraft mittels eines Sensors oder auf Grundlage eines Modells der Lenkung des Fahrzeugs in Abhängigkeit von mindestens einer der Größen Querbeschleunigung, Lenkwinkel und Fahrzeuggeschwindigkeit zu schätzen oder zu modellieren.

Als nachteilig erweist sich dieses Modell, da es weitere Störeinflüsse, wie beispielsweise Fahrbahngegebenheiten, nicht berücksichtigt und daher nicht die gewünschte Genauigkeit aufweist.

Aus der DE 10 2010 048991 A1 ist ein gattungsgemäßes Verfahren bekannt. Nachteilig daran ist, dass die Abbildung eines realistischen Lenkgefühls nur eingeschränkt möglich ist.

In Steer-by-Wire-Lenksystemen wird derzeit ein künstlich erzeugtes Lenkmoment zur Ansteuerung des Feedback-Aktuators verwendet. Dabei ist es sehr aufwendig, die Straßenrückmeldung und das Lenkgefühl in und über einem fahrdynamischen Grenzbereich abzubilden.

Es ist deshalb Aufgabe der vorliegenden Erfindung, ein Verfahren zur Anpassung eines Lenkmoments zur Steuerung eines Feedback-Aktuators einer Steer-by-Wire-Kraftfahrzeuglenkung und ein Verfahren zur Steuerung eines Steer-by-Wire-Lenksystems für Kraftfahrzeuge anzugeben, die eine genauere Abbildung eines realistischen Lenkgefühls erlauben. Weiter soll ein Steer-by-Wire-Lenksystem angegeben werden, dass ein verbessertes Lenkverhalten ermöglicht.

Diese Aufgabe wird von einem Verfahren zur Anpassung eines Lenkmoments zur Steuerung eines Feedback-Aktuators einer Steer-by-Wire-Kraftfahrzeuglenkung mit den Merkmalen des Anspruchs 1, einem Verfahren zur Steuerung eines Steer-by-Wire-Lenksystems für Kraftfahrzeuge mit den Merkmalen des Anspruchs 9 und einem Steer-by-Wire-Lenksystems für Kraftfahrzeuge mit den Merkmalen des Anspruchs 10 gelöst. In den Unteransprüchen sind vorteilhafte Weiterbildungen der Erfindung genannt.

Demnach ist ein Verfahren zur Anpassung eines Lenkmoments zur Steuerung eines Feedback-Aktuators einer Steer-by-Wire-Kraftfahrzeuglenkung mit folgenden Schritten vorgesehen:
- Bereitstellen eines Basis-Lenkmomentes,
- Bereitstellen eines auf Zahnstangenkraft basierten Lenkmomentes,
- Bilden einer Differenz zwischen dem Basis-Lenkmoment und dem auf Zahnstangenkraft basierten Lenkmoment,
- Wenn die Differenz einen vorgegebenen Grenzwert überschreitet, Anpassen des Basis-Lenkmomentes an das auf Zahnstangenkraft basierte Lenkmoment und Weitergabe des resultierenden Lenkmomentes zur Steuerung des Feedback-Aktuators,
- Wenn die Differenz unterhalb des vorgegebenen Grenzwertes bleibt, Weitergabe des Basis-Lenkmomentes zur Steuerung des Feedback-Aktuators.

Durch die Anpassung des Basis-Lenkmomentes bei zu großer Abweichung, wird das resultierende Lenkgefühl sehr realistisch, ohne das dabei die Vorteile eines Basis-Lenkgefühls verloren gehen.

Bevorzugt ist der Grenzwert durch Ausbildung eines Unsicherheitsbandes um das auf Zahnstangenkraft basierte Lenkmoment gebildet. Dabei ist es vorteilhaft, wenn das Unsicherheitsband symmetrisch zu dem Wert des auf Zahnstangenkraft basierten Lenkmomentes ist. Das Unsicherheitsband wird mit regelmäßigem Abstand zum Basislenkmoment nach oben und unten aufgespannt. Dieses fest definierte Unsicherheitsband bildet sich wie eine Hülle um das Basislenkmoment aus.

In einer vorteilhaften Ausführungsform weist das Unsicherheitsband eine obere Bandgrenze von 125% des Wertes des auf Zahnstangenkraft basierten Lenkmoments und untere Bandgrenze von 75% des Wertes des auf Zahnstangenkraft basierten Lenkmoments auf. Es kann aber auch vorgesehen sein, dass die obere Bandgrenze bei 115% des Wertes des auf Zahnstangenkraft basierten Lenkmoments und die untere Bandgrenze bei 85% des Wertes des auf Zahnstangenkraft basierten Lenkmoments liegt.

Vorzugsweise beträgt der Bandabstand zwischen den beiden Bandgrenzen des Unsicherheitsbands wenigstens 20% und höchstens 60% des Wertes des auf Zahnstangenkraft basierten Lenkmoments.

Das Basislenkmoment wird bevorzugt aus einer Fahrzeuggeschwindigkeit und einem am Lenkrad anliegenden Lenkwinkel erzeugt und ist dabei für Hochreibwert-Straßen ausgelegt. Damit kann dem Fahrer ein optimiertes Lenkgefühl übermittelt werden, welches einem elektromechanischen Lenksystem entspricht. Zum Erzeugen des Basislenkmoments können bevorzugt weitere Parameter einfließen, wie eine Lenkradgeschwindigkeit, eine Zahnstangenposition oder eine Zahnstangengeschwindigkeit.

Das zahnstangenkraftbasierte Lenkmoment wird vorzugsweise mittels einer Schätzung der Zahnstangenkraft, der Fahrzeuggeschwindigkeit und der gemessenen Zahnstangenposition bestimmt. Die Zahnstangenkraft wird bevorzugt über eine lenkgetriebemodellbasierte Schätzung ermittelt. Dieses weist bevorzugt ein nichtlineares Lenkgetriebemodell auf. Die lenkgetriebemodellbasierte Schätzung basiert auf Zahnstangeninformationen, wie beispielsweise der Zahnstangenposition und einer Drehmomentabfrage und ist unabhängig von Fahrbahninformationen. Die lenkgetriebemodellbasierte Schätzung kann weiterhin um eine fahrzeugmodellbasierte Schätzung erweitert werden, um die Qualität der Rückmeldung von der Straße an den Fahrer und damit das Lenkgefühl zu verbessern. Dabei wird in einer Einheit eine geschätzte lenkgetriebemodellbasierte Zahnstangenkraft ermittelt und in einer weiteren Einheit eine geschätzte lineare fahrzeugmodellbasierte Zahnstangenkraft, in welchem Fahrbahninformationen implementiert sind, ermittelt. Die Werte beider Zahnstangenkräfte werden miteinander verglichen, wenn nötig auf die ermittelte fahrzeugmodellbasierte Zahnstangenkraft angepasst, und daraus eine resultierende Zahnstangenkraft bestimmt. Die ermittelte oder angepasste resultierende Zahnstangenkraft wird anschließend in das zahnstangenkraftbasierte Lenkmoment umgewandelt. Die weitere Anpassung des Lenkmoments erfolgt wie zuvor beschrieben über den Vergleich zwischen dem Basis-Lenkmoment und dem auf Zahnstangenkraft basierten Lenkmoment.

Die Anpassung umfasst bevorzugt eine Skalierung der Differenz, die dann als Offset auf das Basis-Lenkmoment gegeben wird. Eine Skalierung wird bevorzugt in einem Zustand durchgeführt, wenn der Fahrer eine Übersteuerung oder Untersteuerung vornimmt.

Weiterhin ist ein Verfahren zur Steuerung eines Steer-by-Wire-Lenksystems für ein Kraftfahrzeug umfassend:
- einen auf die gelenkten Räder wirkenden elektronisch regelbaren Lenksteller,
- eine Ansteuereinheit,
- einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Signalübertragung, die den Fahrerwunsch an die Ansteuereinheit übermittelt,
- wobei die Ansteuereinheit den Lenksteller ansteuert, um den Fahrerwunsch in eine Auslenkung der gelenkten Räder zu transformieren,
- vorgesehen, wobei das Feedback-Signal in Abhängigkeit eines Lenkmomentes erfolgt und das Lenkmoment mittels eines zuvor beschriebenen Verfahrens bestimmt wird.

Zudem ist ein Steer-by-Wire-Lenksystem für ein Kraftfahrzeug umfassend:
- einen auf die gelenkten Räder wirkenden elektronisch regelbaren Lenksteller,
- eine Ansteuereinheit,
- einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Einrichtung zur Signalübertragung, die den Fahrerwunsch an die Ansteuereinheit übermittelt, vorgesehen,
wobei die Ansteuereinheit den Lenksteller ansteuert, um den Fahrerwunsch in eine Auslenkung der gelenkten Räder zu transformieren, und wobei das Steer-by-Wire-Lenksystem dazu eingerichtet ist, ein zuvor beschriebenes Verfahren auszuführen. Insbesondere führt die Ansteuereinheit, die eine Auswerteeinheit aufweist, das Verfahren aus.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine schematische Darstellung eines Steer-by-Wire-Lenksystems,
- Figur 2:: ein Blockdiagramm einer Steuerung des Steer-by-Wire-Lenksystems,
- Figur 3:: ein Blockdiagramm eines Moduls zur Anpassung eines Lenkmomentes,
- Figur 4:: einen zeitlichen Verlauf eines Basis-Lenkmomentes, eines aus einer Zahnstangenkraft berechneten Lenkmomentes und eines resultierenden Lenkmomentes, sowie
- Figur 5:: ein weiteres Blockdiagramm eines Moduls zur Anpassung des Lenkmoments, welches um ein Fahrzeugmodell erweitert ist.

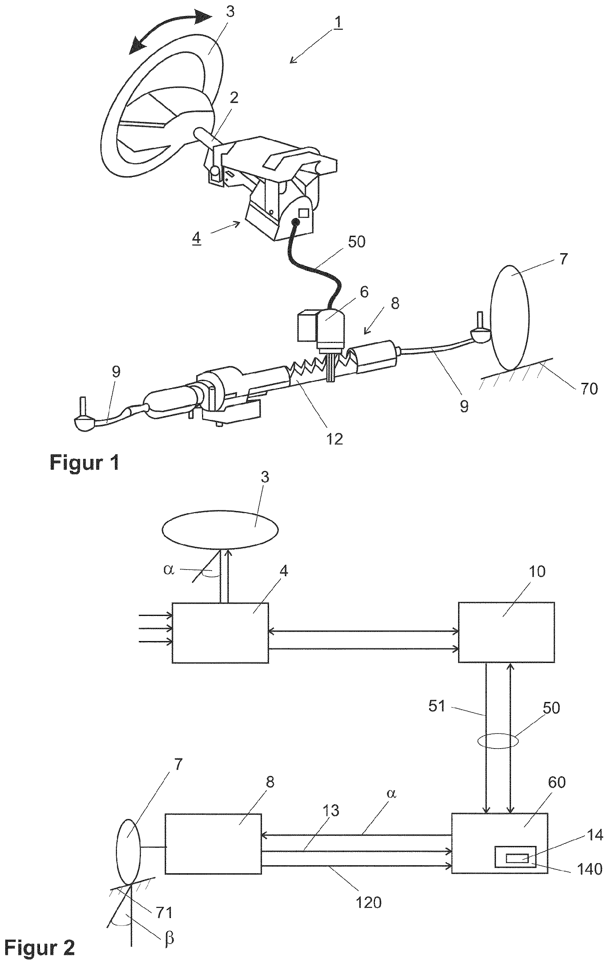

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Als Lenkeingabemittel kann ein Joy-Stick dienen. Des Weiteren ist an der Lenkwelle 2 ein Feedback-Aktuator 4 angebracht, welcher dazu dient, die Rückwirkungen von der Fahrbahn 70 auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel α der Lenkwelle 2 über Signalleitungen an eine Feedback-Aktuator-Monitoreinheit 10 übertragen, wie dies in der Figur 2 veranschaulicht ist. Die Feedback-Aktuator-Monitoreinheit 10 überträgt den Fahrerlenkwunsch an die Ansteuereinheit 60.

Die Feedback-Aktuator-Monitoreinheit 10 übernimmt bevorzugt auch die Ansteuerung des Feedback-Aktuators 4. Die Feedback-Aktuator-Monitoreinheit 10 kann auch integral mit der Ansteuereinheit 60 ausgebildet sein. Die Ansteuereinheit 60 steuert in Abhängigkeit von dem Signal des Drehwinkelsensors sowie weiteren Eingangsgrößen einen elektrischen Lenksteller 6 an, welcher die Stellung der gelenkten Räder 7 steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 7.

Figur 2 zeigt eine Steuerung des Feedback-Aktuators 4. Der Feedback-Aktuator 4 empfängt Signale über eine Signalleitung 50 unter anderem von dem Drehwinkelsensor, der den Lenkwinkel α, die Lenkwinkelbeschleunigung und die Lenkwinkelgeschwindigkeit misst und speichert. Der Feedback-Aktuator 4 kommuniziert mit einer Feedback-Aktuator-Monitoreinheit 10, die den Feedback-Aktuator 4 steuert. Die Feedback-Aktuator-Monitoreinheit 10 empfängt von einer Ansteuereinheit 60 des Lenkstellers 6 den Ist-Radlenkwinkel β der gelenkten Räder 7, sowie weitere Größen, die die Ansteuereinheit 60 ermittelt hat. Die an einer Zahnstange 12 gemessene Zahnstangenposition 120 und weitere Fahrbahninformationen 13 werden an die Ansteuereinheit 60 weiter gegeben. Die Ansteuerungseinheit 60 weist ein Modul 14 zur Bestimmung der Zahnstangenkraft auf. Das Modul 14 zur Bestimmung der Zahnstangenkraft verwendet eine lenkgetriebemodellbasierte Zahnstangenkraft F_{r,estrack}, die anhand der gemessenen Zahnstangenposition 120 sowie des vom Fahrer eingeleiteten Lenkmoments geschätzt wird. Die bestimmte Zahnstangenkraft 14 wird in einer Auswerteeinheit 140 zur Anpassung eines Basis-Lenkmoments verwendet. Der Feedback-Aktuator 4 wird entsprechend dem resultierenden Lenkmoment angesteuert, das somit ein Lenkgefühl erzeugt. Die Ansteuerungseinheit 60 empfängt weiterhin fahrerseitige Lenkbefehle 51, wie den Lenkwinkelstatus.

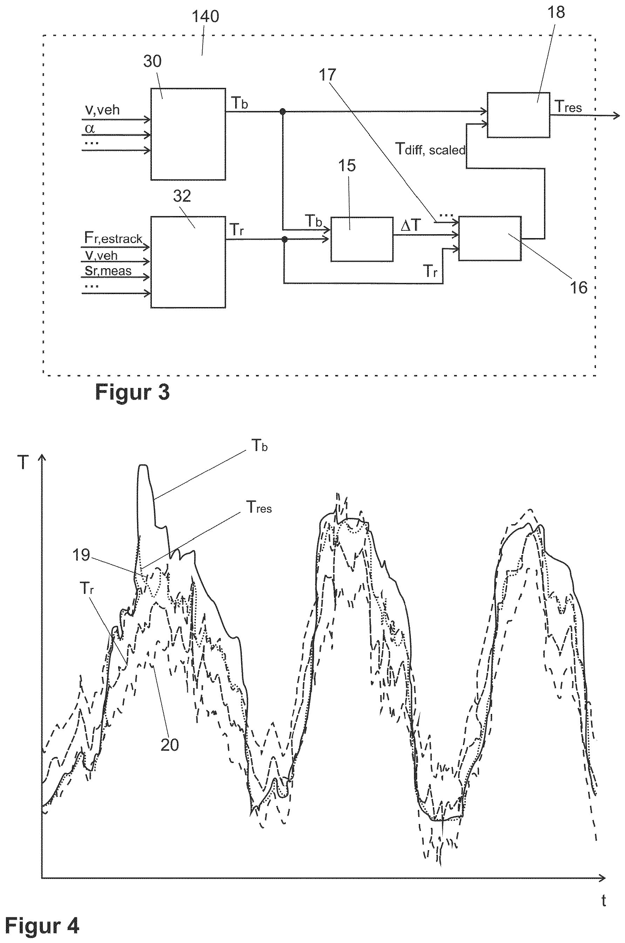

In Figur 3 ist die Auswerteeinheit 140 im Detail dargestellt. Ein Basislenkmoment T_{b} wird in einer Einheit 30 aus der Fahrzeuggeschwindigkeit v_{,veh} und einem am Lenkrad anliegenden Lenkwinkel oder einer Lenkradgeschwindigkeit erzeugt und für Hochreibwert-Straßen ausgelegt, d. h. es wird angenommen, dass der Straßenreibwert der Fahrbahn einen Hochreibwert aufweist, um so ein elektromechanisches Lenksystem nachzubilden. Ein Hochreibwert ergibt sich etwa auf trockenem Asphalt, während ein Mittelreibwert sich bei Schnee und ein Niedrigreibwert sich bei Eis einstellt.

Ein aus dem Basislenkmoment T_{b} resultierendes Lenkgefühl weist keine Unstetigkeiten auf und ist daher sehr angenehm für den Fahrer. Es ist dabei aber sehr aufwendig eine Straßenrückmeldung (Reibwert und dergleichen) abzubilden.

Neben dem Basislenkmoment T_{b} wird ein auf einer Zahnstangenkraft basiertes Lenkmoment Tᵣ bereitgestellt. Dieses auf Zahnstangenkraft basierte Lenkmoment Tᵣ wird in einer Einheit 32 mittels einer Schätzung der lenkgetriebemodellbasierten Zahnstangenkraft F_{r,estrack}, der Fahrzeuggeschwindigkeit v_{,veh} und der gemessenen Zahnstangenposition s_{r,meas} und gegebenenfalls weiteren Parametern bestimmt.

Um die Straßenrückmeldung (Spurrillen, Unebenheiten, Straßenreibwert, usw.) mit in das Lenkgefühl einfließen zu lassen, wird das Basis-Lenkmoment T_{b} erfindungsgemäß durch das zahnstangenkraftbasierte Lenkmoment Tᵣ verglichen und wenn nötig, besonders wenn ein Übersteuern oder ein Untersteuern vorliegt, skaliert.

In einem ersten Schritt werden das Basis-Lenkmoment T_{b} und das zahnstangenkraftbasierte Lenkmoment Tᵣ durch Differenzbildung 15 verglichen. Die Differenz der beiden Werte ΔT fließt in eine Skalierung 16 ein. Da das zahnstangenkraftbasierte Lenkmoment Tᵣ gewisse Unsicherheiten mit sich bringt, wird ein dynamisch erzeugtes Unsicherheitsband um das zahnstangenkraftbasierte Lenkmoment Tᵣ gelegt. Dabei wird der jeweilige Wert des auf Basis der Zahnstangenkraft gebildeten Lenkmoments Tᵣ um +/- 25%, bevorzugt +/-15% reduziert (untere Bandgrenze) bzw. erhöht (obere Bandgrenze). Neben dem Differenzwert ΔT fließen daher auch die Informationen über die Unsicherheit 17 und das zahnstangenkraftbasierte Lenkmoment Tᵣ in die Skalierung 16 mit ein. In der Skalierung 16 wird eine skalierte Differenz T_{diff,scaled} aus dem Differenzmoment ΔT und dem zahnstangenkraftbasierten Lenkmoment Tᵣ für das Basis-Lenkmoment T_{b} bestimmt, die auf das Basis-Moment als Offset 18 angewendet wird, wobei das resultierende Lenkmoment Tᵣₑₛ für die Steuerung der Steer-by-Wire-Lenkung Verwendung findet.

Figur 4 zeigt den zeitlichen Verlauf eines Basis-Lenkmoments T_{b}, eines dazugehörigen auf Zahnstangenkraft basierenden Lenkmomentes Tᵣ und das resultierende Lenkmoment Tᵣₑₛ. Die Skalierung erfolgt dabei wie folgt:
Befindet sich das Basis-Lenkmoment T_{b} innerhalb der oberen und unteren Bandgrenze 19,20 des Unsicherheitsbandes des auf Zahnstangenkraft gebildeten Lenkmoments Tᵣ, wird das Basis-Lenkmoment T_{b} nicht angepasst und das resultierende Lenkmoment Tᵣₑₛ entspricht dem Basis-Lenkmoment T_{b}. Liegt das Basis-Lenkmoment T_{b} hingegen außerhalb des Unsicherheitsbandes, wird dieses an das zahnstangenkraftbasierte Lenkmoment Tᵣ angepasst. Die Anpassung erfolgt in Abhängigkeit der Fahrsituation bevorzugt durch Skalierung der Differenz zwischen zahnstangenkraftbasiertem Lenkmoment Tᵣ und dem Differenzmoment ΔT und wird anschließend als Offset auf das Basis-Lenkmoment T_{b} addiert, d. h. durch Totband-Bereiche am Unsicherheitsband. Im Falle einer Unter-oder Übersteuerung wird die komplette Differenz addiert, sodass das Lenkgefühl ausschließlich dem modellierten zahnstangenkraftbasierten Lenkmoment Tᵣ entspricht. Bei Fahrbahnen mit Niedrigreibwert oder bei Fahrmanövern im Grenzbereich wird das Basis-Lenkmoment T_{b} entsprecht stark modifiziert, um ein realistisches Lenkgefühl zu erzeugen.

Das resultierende Lenkmoment Tᵣₑₛ fließt in die Steuerung des Feedback-Aktuators ein. Das resultierende Lenkmoment Tᵣₑₛ ist somit das rechnerische Lenkmoment, das als Reaktionsmoment dem vom Fahrer in das Lenkrad eingebrachten Lenkmoment entgegenwirken soll.

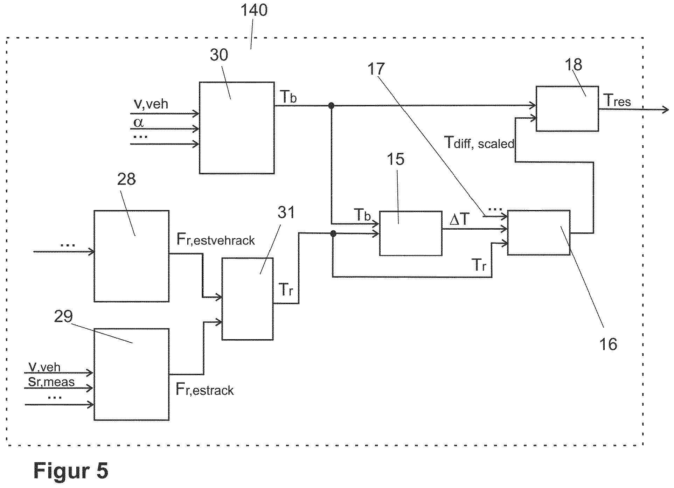

Figur 5 zeigt eine alternative Ausbildung der Auswerteeinheit 140, welche um ein lineares Fahrzeugmodell erweitert wird, in welchem Fahrbahninformationen implementiert sind. Hierbei wird wie in Figur 3 das Basislenkmoment T_{b} in der Einheit 30 aus der Fahrzeuggeschwindigkeit v_{,veh} und einem am Lenkrad anliegenden Lenkwinkel oder einer Lenkradgeschwindigkeit erzeugt und für Hochreibwert-Straßen ausgelegt.

Neben dem Basislenkmoment T_{b} wird ein auf einer Zahnstangenkraft basiertes Lenkmoment Tᵣ bereitgestellt. Das zahnstangenkraftbasierte Lenkmoment Tᵣ setzt sich dabei aus einer Zahnstangenkraft zusammen, welche sich aus einer linearen fahrzeugmodellbasierten Schätzung der Zahnstangenkraft F_{r,estvehrack} und der lenkmodellbasierten Zahnstangenkraft F_{r,estrack} ergibt. Die fahrzeugmodellbasierte Zahnstangenkraft wird in einer Einheit 28 ermittelt und die lenkgetriebemodellbasierte Zahnstangenkraft in einer Einheit 29 aus der Fahrzeuggeschwindigkeit v_{,veh} und der gemessenen Zahnstangenposition s_{r,meas} bestimmt. In der Einheit 31 werden die ermittelten Zahnstangenkräfte verglichen und aus beiden Werten eine geschätzte Zahnstangenkraft gebildet. Weiterhin wird in der Einheit 31 aus der geschätzten Zahnstangenkraft das zahnstangenkraftbasierte Lenkmoment Tᵣ gebildet.

Das resultierende Lenkmoment Tᵣₑₛ wird wie unter Figur 3 beschrieben, ermittelt.

## Patentansprüche

1. Verfahren zur Anpassung eines Lenkmoments zur Steuerung eines Feedback-Aktuators (4) einer Steer-by-Wire-Kraftfahrzeuglenkung mit folgenden Schritten:
• Bereitstellen eines Basis-Lenkmomentes (T_{b}),
• Bereitstellen eines auf Zahnstangenkraft basierten Lenkmomentes (Tᵣ),
• Bilden einer Differenz zwischen dem Basis-Lenkmoment (T_{b}) und dem auf Zahnstangenkraft basierten Lenkmoment (Tᵣ),
**dadurch gekennzeichnet, dass**
• Wenn die Differenz einen vorgegebenen Grenzwert überschreitet, Anpassen des Basis-Lenkmomentes (T_{b}) an das auf Zahnstangenkraft basierte Lenkmoment (Tᵣ) und Weitergabe des resultierenden Lenkmomentes zur Steuerung des Feedback-Aktuators (4),
• Wenn die Differenz unterhalb des vorgegebenen Grenzwertes bleibt, Weitergabe des Basis-Lenkmomentes (T_{b}) zur Steuerung des Feedback-Aktuators.

2. Verfahren nach Anspruch 1, **dadurch gekennzeichnet, dass** der Grenzwert durch Ausbildung eines Unsicherheitsbandes um das auf Zahnstangenkraft basierte Lenkmoment (Tᵣ) gebildet wird.

3. Verfahren nach Anspruch 2, **dadurch gekennzeichnet, dass** das Unsicherheitsband symmetrisch zu dem auf Zahnstangenkraft basierten Lenkmoment (Tᵣ) ist.

4. Verfahren nach Anspruch 3, **dadurch gekennzeichnet, dass** das Unsicherheitsband eine obere Bandgrenze von 125% des Wertes des auf Zahnstangenkraft basierten Lenkmoments (Tᵣ) und eine untere Bandgrenze von 75% des Wertes des auf Zahnstangenkraft basierten Lenkmoments (Tᵣ) aufweist.

5. Verfahren nach Anspruch 4, **dadurch gekennzeichnet, dass** die obere Bandgrenze bei 115% des Wertes des auf Zahnstangenkraft basierten Lenkmoments (Tᵣ) und die untere Bandgrenze bei 85% des Wertes des auf Zahnstangenkraft basierten Lenkmoments (Tᵣ) liegt.

6. Verfahren nach einem der Ansprüche 2 bis 4, **dadurch gekennzeichnet, dass** der Bandabstand zwischen den beiden Bandgrenzen des Unsicherheitsbandes wenigstens 20% und höchstens 60% des Wertes des auf Zahnstangenkraft basierten Lenkmoments (Tᵣ) beträgt.

7. Verfahren nach einem der vorliegenden Ansprüche, **dadurch gekennzeichnet, dass** das Basislenkmoment (T_{b}) aus einer Fahrzeuggeschwindigkeit (v_{,veh}) und einem am Lenkrad anliegenden Lenkwinkel (α) erzeugt wird und für Hochreibwert-Straßen ausgelegt ist.

8. Verfahren nach einem der vorliegenden Ansprüche, **dadurch gekennzeichnet, dass** das zahnstangenkraftbasierte Lenkmoment (Tᵣ) mittels einer geschätzten Zahnstangenkraft (F_{r,estrack}), der Fahrzeuggeschwindigkeit (v_{,veh}) und der gemessenen Zahnstangenposition (s_{r,meas}) bestimmt wird.

9. Verfahren zur Steuerung eines Steer-by-Wire-Lenksystems für ein Kraftfahrzeug umfassend:
- einen auf die gelenkten Räder (7) wirkenden elektronisch regelbaren Lenksteller (6),
- eine Ansteuereinheit (60),
- einen Feedback-Aktuator (4), der über ein Lenkeingabemittel (3) von einem Fahrer mit einem Fahrerwunsch für einen Lenkwinkel (α) beaufschlagt werden kann und ein Feedback-Signal an das Lenkeingabemittel (3) als Reaktion auf den Fahrerwunsch und einen Fahrzustand des Kraftfahrzeugs ausgibt,
- eine Signalübertragung, die den Fahrerwunsch an die Ansteuereinheit (60) übermittelt,
- wobei die Ansteuereinheit (60) den Lenksteller (6) ansteuert, um den Fahrerwunsch in eine Auslenkung der gelenkten Räder (7) zu transformieren,
- und wobei das Feedback-Signal in Abhängigkeit eines Lenkmomentes erfolgt, **dadurch gekennzeichnet, dass** das Lenkmoment mittels eines Verfahrens nach einem der Ansprüche 1 bis 8 bestimmt wird.

10. Steer-by-Wire-Lenksystem (1) für ein Kraftfahrzeug umfassend:
- einen auf die gelenkten Räder (7) wirkenden elektronisch regelbaren Lenksteller (6),
- eine Ansteuereinheit (60),
- einen Feedback-Aktuator (4), der über ein Lenkeingabemittel (3) von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt,
- eine Einrichtung zur Signalübertragung, die den Fahrerwunsch an die Ansteuereinheit (60) übermittelt,
wobei die Ansteuereinheit (60) den Lenksteller (6) ansteuert, um den Fahrerwunsch in eine Auslenkung der gelenkten Räder (7) zu transformieren, **dadurch gekennzeichnet, dass** das Steer-by-Wire-Lenksystem (1) dazu eingerichtet ist, ein Verfahren nach einem der Ansprüche 1 bis 9 auszuführen.

## Claims

1. A method for adapting a steering torque for controlling a feedback actuator (4) of a steer-by-wire motor vehicle steering system, having the following steps:
• providing a basic steering torque (T_{b}),
• providing a rack-force-based steering torque (Tᵣ),
• forming a difference between the basic steering torque (T_{b}) and the rack-force-based steering torque (Tᵣ),
**characterized in that**
• if the difference exceeds a predetermined limit value, adapting the basic steering torque (T_{b}) to the rack-force-based steering torque (Tᵣ) and transmitting the resulting steering torque in order to control the feedback actuator (4),
• if the difference remains below the predetermined limit value, transmitting the basic steering torque (T_{b}) in order to control the feedback actuator.

2. The method as claimed in claim 1, **characterized in that** the limit value is formed by forming an uncertainty band around the rack-force-based steering torque (Tᵣ).

3. The method as claimed in claim 2, **characterized in that** the uncertainty band is symmetrical with respect to the rack-force-based steering torque (Tᵣ).

4. The method as claimed in claim 3, **characterized in that** the uncertainty band has an upper band limit of 125% of the value of the rack-force-based steering torque (Tᵣ) and a lower band limit of 75% of the value of the rack-force-based steering torque (Tᵣ).

5. The method as claimed in claim 4, **characterized in that** the upper band limit is 115% of the value of the rack-force-based steering torque (Tᵣ) and the lower band limit is 85% of the value of the rack-force-based steering torque (Tᵣ).

6. The method as claimed in one of claims 2 to 4, **characterized in that** the band distance between the two band limits of the uncertainty band is at least 20% and at most 60% of the value of the rack-force-based steering torque (Tᵣ).

7. The method as claimed in one of the preceding claims, **characterized in that** the basic steering torque (T_{b}) is produced from a vehicle speed (v_{,veh}) and a steering angle (α) present at the steering wheel and is configured for high friction coefficient roads.

8. The method as claimed in one of the preceding claims, **characterized in that** the rack-force-based steering torque (Tᵣ) is determined by means of an estimated rack force (F_{r,estrack}), the vehicle speed (v_{,veh}) and the measured rack position (s_{r,meas}).

9. A method for controlling a steer-by-wire steering system for a motor vehicle, comprising:
- an electronically controllable steering actuator (6) which acts on the steered wheels (7),
- an activation unit (60),
- a feedback actuator (4) which can have a driver demand for a steering angle (α) applied to it by a driver by way of a steering input means (3) and which outputs a feedback signal to the steering input means (3) in reaction to the driver demand and to a driving state of the motor vehicle,
- a signal transmission means which transmits the driver demand to the activation unit (60),
- wherein the activation unit (60) activates the steering actuator (6) in order to transform the driver demand into a deflection of the steered wheels (7),
- and wherein the feedback signal is implemented in a manner dependent on a steering torque, **characterized in that** the steering torque is determined by means of a method as claimed in one of claims 1 to 8.

10. A steer-by-wire steering system (1) for a motor vehicle, comprising:
- an electronically controllable steering actuator (6) which acts on the steered wheels (7),
- an activation unit (60),
- a feedback actuator (4) which can have a driver demand for a steering angle applied to it by a driver by way of a steering input means (3) and which outputs a feedback signal to the steering input means in reaction to the driver demand and to a driving state of the motor vehicle,
- a device for signal transmission which transmits the driver demand to the activation unit (60),
wherein the activation unit (60) activates the steering actuator (6) in order to transform the driver demand into a deflection of the steered wheels (7), **characterized in that** the steer-by-wire steering system (1) is configured to carry out a method as claimed in one of claims 1 to 9.

## Revendications

1. Procédé de réglage d'un couple de braquage destiné à la commande d'un actionneur de rétroaction (4) d'un système de direction électrique de véhicule automobile, ledit procédé comprenant les étapes suivantes :
• fournir un couple de braquage de base (T_{b}),
• fournir un couple de braquage (Tᵣ) basé sur l'effort à la crémaillère,
• former une différence entre le couple de braquage de base (T_{b}) et le couple de braquage basé sur l'effort à la crémaillère (Tᵣ),
**caractérisé en ce que**
• si la différence devient supérieure à une valeur limite spécifiée, le couple de braquage de base (T_{b}) est adapté au couple de braquage (Tᵣ) en fonction de l'effort à la crémaillère et le couple de braquage résultant est transmis pour commander l'actionneur de rétroaction (4),
• si la différence reste inférieure à la valeur limite spécifiée, le couple de braquage de base (T_{b}) est transmis à la commande de l'actionneur de rétroaction.

2. Procédé selon la revendication 1, **caractérisé en ce que** la valeur limite est formée par formation d'une bande d'incertitude autour du couple de braquage (Tᵣ) basé sur l'effort à la crémaillère.

3. Procédé selon la revendication 2, **caractérisé en ce que** la bande d'incertitude est symétrique au couple de braquage (Tᵣ) basé sur l'effort à la crémaillère.

4. Procédé selon la revendication 3, **caractérisé en ce que** la bande d'incertitude comporte une limite de bande supérieure de 125 % de la valeur du couple de braquage (Tᵣ) basé sur l'effort à la crémaillère et une limite de bande inférieure de 75 % de la valeur du couple de braquage (Tᵣ) basé sur l'effort à la crémaillère.

5. Procédé selon la revendication 4, **caractérisé en ce que** la limite de bande supérieure est de 115 % de la valeur du couple de braquage (Tᵣ) basé sur l'effort à la crémaillère et la limite de bande inférieure est de 85 % de la valeur du couple de braquage (Tᵣ) basé sur l'effort à la crémaillère.

6. Procédé selon l'une des revendications 2 à 4, **caractérisé en ce que** la distance de bande entre les deux limites de bande de la bande d'incertitude est d'au moins 20 % et d'au plus 60 % de la valeur du couple de braquage (Tᵣ) basé sur l'effort à la crémaillère.

7. Procédé selon l'une des revendications précédentes, **caractérisé en ce que** le couple de braquage de base (T_{b}) est généré à partir d'une vitesse de véhicule (v_{,veh}) et d'un angle de braquage (α) appliqué au volant et est conçu pour des routes à valeur de friction élevée.

8. Procédé selon l'une des revendications précédentes, **caractérisé en ce que** le couple de braquage (Tᵣ) basé sur l'effort à la crémaillère est déterminé au moyen d'un effort à la crémaillère estimé (F_{r,estrack}), de la vitesse de véhicule (v_{,veh}) et de la position de crémaillère mesurée (S_{r.meas}).

9. Procédé de commande d'un système de direction électrique destiné à un véhicule automobile, ledit procédé comprenant les étapes suivantes :
- un dispositif de réglage de braquage à régulation électronique (6) qui agit sur les roues directrices (7),
- une unité de commande (60),
- un actionneur de rétroaction (4) qui peut être actionné, par le biais d'un moyen d'entrée de braquage (3), par un conducteur souhaitant un angle de braquage (α) et qui délivre un signal de rétroaction au moyen d'entrée de braquage (3) en réaction au souhait du conducteur et à un état de roulement du véhicule automobile,
- une transmission de signal qui transmet le souhait du conducteur à l'unité de commande (60),
- l'unité de commande (60) commandant le dispositif de réglage de braquage (6) pour transformer le souhait du conducteur en braquage des roues directrices (7),
- le signal de rétroaction étant effectué en fonction d'un couple de braquage, **caractérisé en ce que** le couple de braquage est déterminé par un procédé selon l'une des revendications 1 à 8.

10. Système de direction électrique (1) destiné à un véhicule automobile, ledit système comprenant :
- un dispositif de réglage de braquage à régulation électronique (6) qui agit sur les roues directrices (7),
- une unité de commande (60),
- un actionneur de rétroaction (4) qui peut être actionné, par le biais d'un moyen d'entrée de braquage (3), par un conducteur souhaitant un angle de braquage et qui délivre un signal de rétroaction au moyen d'entrée de braquage en réaction au souhait du conducteur et à un état de roulement du véhicule automobile,
- un module de transmission de signal qui transmet la souhait du conducteur à l'unité de commande (60), l'unité de commande (60) commandant le dispositif de réglage de braquage (6) pour transformer le souhait du conducteur en un braquage des roues directrices (7), **caractérisé en ce que** le système de direction électrique (1) est conçu pour mettre en œuvre un procédé selon l'une des revendications 1 à 9.
